# EUROPEAN PATENT APPLICATION

(11) **EP 1 385 326 A1**
(43) Date of publication of application: **28.01.2004**
(21) Application number: 02016574.2
(22) Date of filing: 24.07.2002
(51) Int. Cl.: H04N 1/00

(54) **Displaying means having a plurality of memory card slots**

(71) Applicant: AboCom Systems, Inc., Hsin-Chu, Taiwan (TW)
(72) Inventor: Oh-Yang, Eric, Miao-Lih Hsuan, Taiwan (TW)
(74) Representative: Winkler, Andreas, Dr.

(57) **Abstract**

The present invention includes pluralities of memory card slots incorporated therein for connecting various types of memory card and reading the information therein. At least one transmission interface port is used to connect the means that provides the function to store and provide the digital image. A power source is used to provide the power and a signal process controller is used to process the input image. A display is used to display the image and a display module is coupled to the signal process controller to send the signal processed by the signal process controller to the display.

## Description

### Field of invention :

This invention is related to the means for displaying, especially related to the displaying means equipped with pluralities of memory card slots.

### Background :

As the popularity of digital image device increasing, it has become the trend to digitalize various images by using the digital camera or scanner. Moreover, users could share their photos or pictures through file transmission or Internet. Unlike usual camera or picture, the ordinary media is no longer necessary, and the limitation of space and time would not exist in the currency of images.

However, since the digital image spreads quickly for the convenience of duplication and preservation, in general case, users still need personal computer ( PC ) or personal digital assistant( PDA )to display these images for appreciation. Otherwise, the images should be print on the papers or ordinary media. In this way, it is inconvenient.

Besides, people like to place their beloved pictures in the frame and paste various paintings and posters on the wall as decorations. If users want to take the same disposition on any digital image, they must print it on papers. Moreover, if users want to mount some picture or painting with paste and hang it on the wall, they must print it on papers. Thus, there is nothing different from the situation before the digitalization of images. To such an innovative technology, it is indeed sarcasm and waste. This invention provides a means for displaying having pluralities of memory card slots, and has the capability to promote the convenience of the usage of digital images.

The common storage device of digital images is the memory card. Its standards comprise not only the early compact flash card( CF card ), smart media card ( SM card ) , and multi media card ( MM card ) , but also the newly memory stick card ( MS card ) and smart digital card ( SD card ) . The memory card is mainly applied to cooperate with the digital camera or other digital image device. The digital camera is usually equipped with some kind of slot, and the users could store the picture in the memory card therein as soon as they take it. Besides, the users can employ the card reader to interchange the file between the memory card and the hard disc of PC. Comparing to common floppy disc, the memory has much more capacity and faster speed, so the latter became the main stream now. This invention provides one or more slots supporting various types of memory card, displays the digital images in the memory card on the display by using the signal process controller of this invention, and reaches the same effect of printing the digital images out on papers.

Besides the memory card, the micro drive is one of the popular devices, too. Its I/O means usually adopts the interface of Personal Computer Memory Card International Association. This invention also provides a slot for this interface. The micro drive is a hard disc with the size equal to one coin, but everything needed is there. Hence, besides the interface they use, there is nothing different between the ordinary hard disc and the micro drive. However, the capacity of the micro drive is beyond comparison to the memory card. Ordinary high-capacity memory cards have 128MB to 256MB, but the micro drive could equip with several gigabytes. Hence, the micro drive can store high quality multimedia file with huge size. Nevertheless, the micro drive has some defects. It consumes more electricity and its price is higher. Therefore, there are not many supporting device, and the popularity is far away.

In addition to the storage means above, this invention also provides the interface of USB, RS232, P S/2, IEEE1394, VGA, etc. Consequently, the apparatus of this invention can link to various devices with the ability of operation or storage, such as PC, PDA, digital camera, digital video camera, scanner, VCD player, or DVD player. The images in the storage device of them can be withdrawn and displayed on the display of this invention directly.

As the data are transferred in various ways mentioned above, they would be handed over to the signal process controller and further disposed, and then deliver to the liquid crystal display of liquid crystal module for displaying. In this way, the effect is the same as that of printing images on papers and the contents displayed can be modified anytime. Besides, the display can be set to change automatically in regular time interval, and the richness of decoration would increase greatly.

In order to reach foregoing purpose, The present invention disclose a means for displaying having pluralities of memory card slots.

### Summary :

The main goal of this invention is to display the digital images stored in the memory card on the liquid crystal display ( LCD ) directly for appreciation without the aid of PC, PDA, or other device capable of operation.

A means for displaying having pluralities of memory card slots, which supports most types of available memory cards, is disclosed. Users could apply various digital image devices, such as digital camera or digital video camera, to store the images in the memory card therein directly, and use this invention to process them and display them on the LCD. Moreover, users could set the dynamical change or circulative display with the software therein. In this way, the utilization of the digital image becomes much more convenient and various. The characteristic of this invention is to employ the digital image for decoration, appreciation, presentation, and browse without the necessity of printing them on the papers.

The foregoing means for displaying comprises pluralities of memory card slots incorporated therein for connecting various types of memory card and reading the information therein. At least one transmission interface port is used to connect the means that provides the function to store and provide the digital image. A power source is used to provide the power and a signal process controller is used to process the input image. A display is used to display the image and a display module is coupled to the signal process controller to send the signal processed by the signal process controller to the display.

The supported types of memory card include Smart Media card, Compact Flash card, Memory Stick, Smart Digital card, and Multi Media card. The supported interface of transmission port includes PCMCIA, RS232, USB2.0, and IEEE1394.

### Brief Description of the Drawing :

- Fig. 1: is the block diagram of the structure of the means for displaying.
- Fig. 2: is the flowchart of the setting procedure of the display mode by the digital process controller.

### Detailed Description :

This invention discloses a means for displaying with pluralities of memory card slots. In more detail, this invention provides a means for displaying which uses the memory card as the main input device of digital images. The detailed description is presented as follows for illustration instead of limitation.

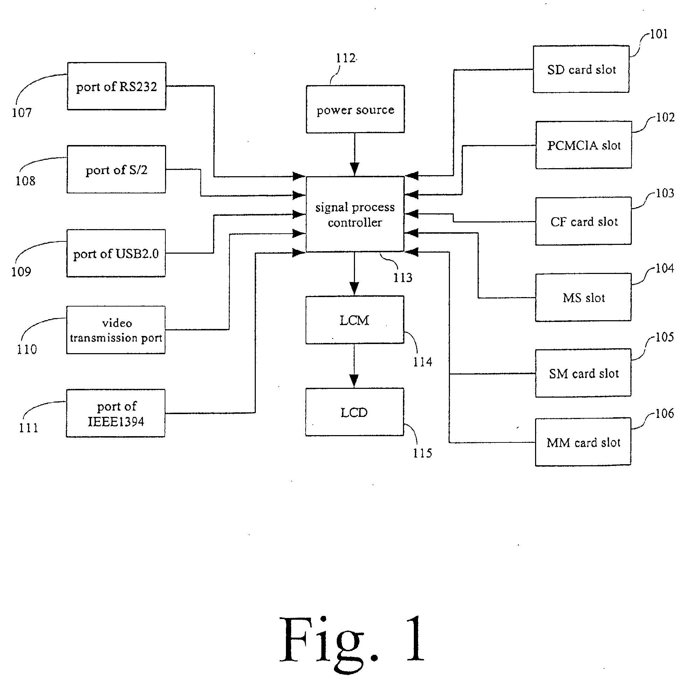

As shown in fig. 1, it is the block diagram of the structure of the means for displaying. The essential components include signal process controller 113, various memory card slots 101~106, transmission ports of various interfaces 107~110, power source 112, liquid crystal module ( LCM ) 114, and liquid crystal display ( LCD ) 115. The signal process controller 113 is the core of this invention, and capable of recognizing whether the input data is the format that can be displayed and processing the data according to their property to let them be displayed on the LCD 115 through LCM 114. General digital image formats comprise bitmaps (BMP), graphics interchange format ( GIF ) , joint photographic experts group ( JPEG ) , JPG, portable network graphics ( PNG ) , and tag image file format ( TIF ) . The signal process controller 113 employs the software therein to encode the digital 1 image in the format that can be processed by LCM 114, and displays them on the LCD 115.

The main feature of the means disclosed by this invention is that the memory card storing digital images can be inserted into the various slots 101~106 of this invention, and the digital images are displayed on the LCD 115 directly. The means of this invention provides various popular memory card slots, which comprise the SD card slot 101 for Smart Digital Card, the PCMCIA slot 102 for devices using PCMCIA interface, CF card slot 103 for Compact Flash card, MS slot 104 for Memory Stick, SM card slot 105 for Smart Media card, and MM card slot 106 for Multi Media card.

Among them, the PCMCIA slot 102 is mainly provided for Micro Drive, but also for other devices using PCMCIA interface, such as the external CD-ROM drive.

Through the foregoing interface of memory cards, the various digital images can be transmitted to the signal process controller 113 for further handling and displayed on the LCD 115. Thus, the purpose of fully utilizing the digital images and the usage of decoration are achieved without printing them on papers or ordinary media. Moreover, since the interfaces provided in this invention embrace almost all those available, this invention is highly compatible.

Besides, the signal process controller 113 could recognize that the input data is in the formation of either the animation or the video, such as MPEG, AVI, etc. They mainly come from video transmission port 110, port of IEEE1394 111, or port of USB2.0 109, because these ports have broader bandwidth for huge video file. Similarly, the signal process controller 113 uses the software therein to encode foregoing video file becoming the format that can be processed by the LCM 114 and display it on the LCD 115 immediately.

The foregoing video transmission port 110 is usually the VGA port of PC and laptop, or the port of audio-visual terminal, and can be applied to connect PC, laptop, VCD player, DVD player, etc. The ports of IEEE1394 111 and of USB2.0 109 are used to link the digital camera, digital video camera, PDA, PC, laptop, external CD-ROM drive, external Hard Discs, etc.

Moreover, there are ports of RS232 107 and of PS/2 108, and both of them possess narrower bandwidth, hence they are only suitable for general images. The primary linkups include PC, laptop, PDA, etc.

Therefore, besides the digital images like pictures and photos, this invention can play the digital videos in various formats coming through foregoing transmission ports. Thus, the abundance of the means of this invention further increases.

Moreover, users can set the display mode through the digital process controller 113.

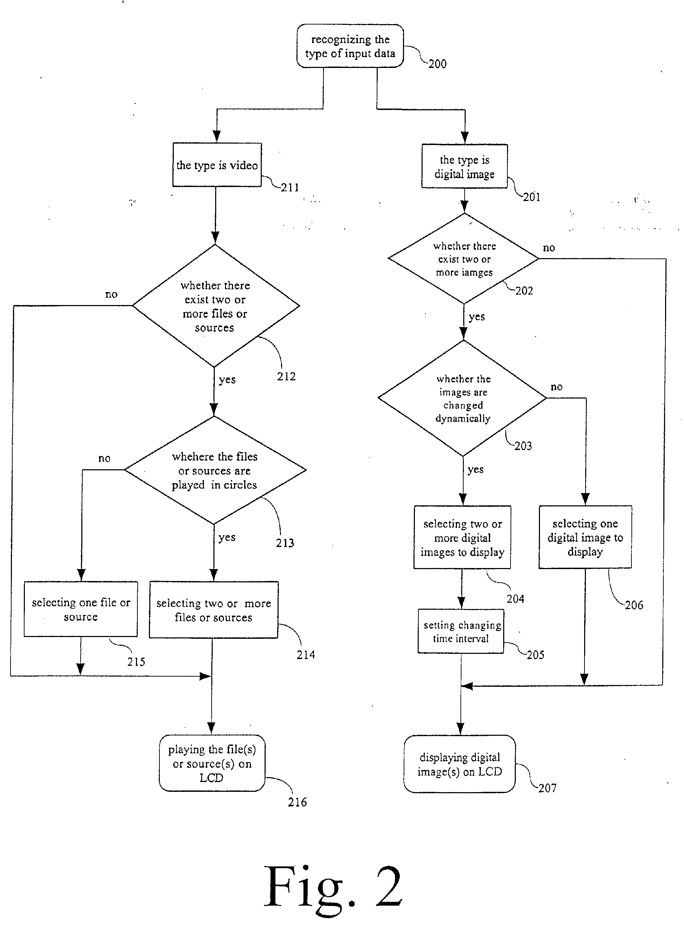

As shown in fig. 2, it is the flowchart of the setting procedure of the display mode by the digital process controller. First, the input data type is recognized as either digital image or video file 200. If the recognized type is static digital image 201, the number of the images therein is recognized 202. If there exists only one digital image, it would be presented on the LCD 115 directly 207. Otherwise, if there exist two or more images, it would be determined whether the images are changed dynamically 203. If it is determined not to change the images dynamically, one digital image would be selected from plural digital images to be displayed 206 and the selected one is presented on the LCD 115 directly 207. If it is determined to change the images dynamically, two or more digital images have to be selected to be displayed 204, and the changing time interval is set sequentially 205. Finally, one of the selected digital images is demonstrated on the LCD 115, 207. For example, if four images are selected and the time interval is set as one hour, the LCM 114 would replace the displaying image by another selected digital image.

In addition, when the input data are video file 211, it would be determined whether there exist two or more files or data sources 212. If there exists only a single file or data source, it would be displayed on the LCD 115 immediately. Otherwise, if there exist two or more video files or data sources, it is determined whether they are played in circles 213. If not, one file or source would be selected 215 and played by the LCD 115 immediately 216. If so, two or more video files or data sources are selected 214 and played on the LCD 115 in circles immediately 216. For instance, if there exist three video files in the micro drive in the slot of PCMCIA and one video source of digital video camera connected to the port of USB2.0, and it is decided to play them in circles, some files or sources would be selected to be played. In this situation, we choose two files and the source of digital video camera to play them in circles. They are going to be demonstrated on the LCD 115 one after one, and the diversity is highly increased.

The display method mentioned-above can make the boring static picture more entertaining, and the setting of playing in circles is able to reach the goal of fully utilizing.

Hence, because of this invention, the digital images can be easily presented without the aid of papers or traditional media. In addition, the goal of browsing, appreciating, and presenting digital images can be reached without the help of PC or other computing devices. The convenience and practicability is highly provided.

The preferred example of this invention is illustrated above, and those who are familiar with ordinary skills in this field will appreciate that some modifications can be taken without any divergence from the spirit and scope of this invention. The protection range of this invention should obey the following claims as well as its equal domain.

The features disclosed in the foregoing description, in the claims and/or in the accompanying drawings may, both separately and in any combination thereof, be material for realising the invention in diverse forms thereof.

## Claims

1. A means for displaying comprising:
pluralities of memory card slot for connecting various types of memory cards and reading the digital images therein;
at least one transmission interface port used to connect an apparatus with the function to store or provide said digital images;
a power source to providing the power;
a signal process controller to process said digital image and control the displaying mode of said digital image ; and
a display to display said digital image ;
a display module to transfer the signal processed by said signal process controller to said displaying.

2. A means for displaying of claim 1, wherein said pluralities of memory card slot supports Smart Digital card.

3. A means for displaying of claim 1, wherein said pluralities of memory card slot supports Compact Flash card.

4. A means for displaying of claim 1, wherein said pluralities of memory card slot supports Memory Stick.

5. A means for displaying of claim 1, wherein said pluralities of memory card slot supports Smart Media card.

6. A means for displaying of claim 1, wherein said pluralities of memory card slot supports Multi Media card.

7. A means for displaying of claim 1, wherein said pluralities of memory card slot supports the interface of Personal 1 Computer Memory Card International Association ( PCMCIA)

8. A means for displaying of claim 1, wherein said transmission interface port includes the interface of RS232.

9. A means for displaying of claim 1, wherein said transmission interface port includes the interface of USB2.0.

10. A means for displaying of claim 1, wherein said transmission interface port includes the interface of IEEE1394.

11. A means for displaying of claim 1, wherein said transmission interface port includes the VGA port.

12. A means for displaying of claim 1, wherein the operation procedure of said signal process controller comprises :
ascertaining whether any digital image exists in said memory card placed in said memory card slot or any video source comes from said transmission interface port ;
if said digital image or said video source exists, processing said digital image or said video source; and
transferring said processed digital image or video source to said display module in order to present said processed digital image or video source on said display.

13. A A means for displaying of claim 1, wherein said display module displays said processed digital image or video source on said display after receiving said processed digital image or video source from said signal process controller.

14. A means for displaying of claim 1, wherein said display module and said display comprises cathode ray tube ( CRT ).

15. A means for displaying of claim 1, wherein said display module and said display comprises liquid crystal display ( LCD )

16. A means for displaying of claim 1, wherein said display module and said display comprises plasma display panel ( PDP ) .

17. A method of the setting procedure of a displaying mode, wherein a means for displaying having pluralities of memory card slots, wherein a signal process controller being capable of changing digital images dynamically, said method comprising :
recognizing the type of the input data ;
if said type is digital image, recognizing whether there exist two or more said digital images ;
if there exists only one, transferring said digital image to a display module to present it on a display ; otherwise, if there exist two or more, determining whether changing said digital images and then if deciding not to change said digital images dynamically, choosing one of said digital images and transferring said chosen digital image to said display module to present on said display directly ; if deciding to change digital images dynamically, choosing two or more said digital images to display, setting the changing time interval, transferring one of said chosen digital images to said display module to present it on said display, and choosing another digital image from the rest of said chosen digital images to replace the displaying digital image after said changing time interval elapses ;
if said type is video file or source, recognizing if there exist two or more said video file or source ; if there exists only one, transferring said video file or source to said display module to present it on said display ;
otherwise, if there exist two or more, determining whether playing said video files or sources in circles and then if deciding not to play said video files or sources in circles, choosing one of said video files or sources and transferring said chosen video file or source to said display module to be presented on said display directly;
if deciding to play said video files or sources in circles, choosing two or more said video files or sources for playing, transferring one of said chosen video files or sources to said display module to be played on said display immediately ; and
when the playing of said chosen video file or source finishes, choosing another said chosen video files or sources to continue said playing.

18. A method of claim 17, wherein said display module and said display comprises cathode ray tube ( CRT ).

19. A method of claim 17, wherein said display module and said display comprises liquid crystal display (LCD) .

20. A method of claim 17, wherein said display module and said display comprises plasma display panel ( PDP ) .

21. A method of claim 17, wherein said display module and said display comprises cathode ray tube ( CRT ) , liquid crystal display ( LCD ) , and plasma display panel ( PDP )

22. A means for displaying, which comprises:
plural memory card slots for connecting various types of memory cards and reading the digital images therein ;
a signal process controller to process said digital images and control the displaying mode of said digital images ;
a display to display said digital image ; and
a display module to transfer the signal processed by said signal process controller to said display.

23. A means for displaying of claim 22, wherein said memory card slots support Smart Digital card.

24. A means for displaying of claim 22, wherein said memory card slots support Compact Flash card.

25. A means for displaying of claim 22, wherein said memory card slots support Memory Stick.

26. A means for displaying of claim 22, wherein said memory card slots support Smart Media card.

27. A means for displaying of claim 22, wherein said memory card slots support Multi Media card.

28. A means for displaying of claim 22, wherein the operation procedure of said signal process controller comprises:
ascertaining whether any said digital image exists in said memory card placed in said memory card slot;
if there exists said digital image, processing said digital image ; and
transferring said processed digital image to said display module in order to present said processed digital image on said display.

29. A means for displaying of claim 22, wherein said display module displays said processed digital image on said display after receiving said processed digital image from said signal process controller.

30. A means for displaying of claim 22, wherein said display module and said display comprises cathode ray tube ( CRT ) ,

31. A means for displaying of claim 22, wherein said display module and said display comprises liquid crystal display ( LCD ) .

32. A means for displaying of claim 22, wherein said display module and said display comprises plasma display panel ( PDP ) .
